Europäisches Patentamt

European Patent Office

Office européen des brevets

(19)

(11) Numéro de publication : **0 055 718**
**B1**

# (12) FASCICULE DE BREVET EUROPÉEN

(45) Date de publication du fascicule du brevet :
**02.05.84**

(21) Numéro de dépôt : **81901691.6**

(22) Date de dépôt : **29.06.81**

(86) Numéro de dépôt international :
**PCT/FR 81/00085**

(87) Numéro de publication internationale :
**WO WO/82002 (21.01.82 Gazettee 82/03)**

(51) Int. Cl.³ : **G 11 B 15/02**

---

(54) **DISPOSITIF ELECTRONIQUE POUR MISE EN MARCHE ET ARRET AUTOMATIQUE PAR LA PAROLE D'UN MAGNETOPHONE.**

---

(30) Priorité : **01.07.80 FR 8014601**

(43) Date de publication de la demande :
**14.07.82 Bulletin 82/28**

(45) Mention de la délivrance du brevet :
**02.05.84 Bulletin 84/18**

(84) Etats contractants désignés :
**AT CH DE GB LI NL**

(56) Documents cités :
**DE-A- 2 728 652**
**DE-A- 2 850 259**
**FR-A- 2 025 547**
**FR-A- 2 034 599**
**FR-A- 2 053 545**
**FR-A- 2 121 976**
**FR-A- 2 390 798**
**US-A- 3 014 991**
**US-A- 3 069 666**

(73) Titulaire : **KANNY, Louis**
**35, rue Savier**
**F-92240 Malakoff (FR)**

(72) Inventeur : **KANNY, Louis**
**35, rue Savier**
**F-92240 Malakoff (FR)**

(74) Mandataire : **Thevenet, Jean-Bruno et al**
**Cabinet BEAU DE LOMENIE 55 rue d'Amsterdam**
**F-75008 Paris (FR)**

Jouve, 18, rue St-Denis, 75001 Paris, France

Dispositif électronique pour mise en marche et arrêt automatique par la parole d'un magnétophone

La présente invention concerne un perfectionnement dans l'emploi des magnétophones, lecteurs de cassettes et d'une manière plus générale tous les reproducteurs et les appareils traitant en particulier la parole, (dictaphone, interphone...) permettant par l'adjonction d'un dispositif électronique, incorporé ou non à l'appareil, de commander par l'action de la parole, la mise en marche et l'arrêt automatique.

Dans les utilisations connues de ce genre la mise en marche et l'arrêt du magnétophone est obtenue manuellement par l'interrupteur de l'appareil, ce qui oblige l'utilisateur à se tenir près de l'appareil et mobilise en partie son attention sur les manœuvres marche-arrêt. Dans d'autres cas l'arrêt est obtenu automatiquement par des signaux préenregistrés sur une 2ème piste, ce qui oblige à une préparation préalable de la bande en fonction des arrêts et remises en marche voulus, mais ne répond pas au but que se propose cette invention.

On connaît également par le document DE-A-2 728 652 un dispositif électronique permettant de commander automatiquement par la parole l'arrêt et la marche d'un magnétophone comprenant un amplificateur recevant les signaux d'entrée basse fréquence produits par le microphone du magnétophone, une bascule, et un interrupteur électronique pour la commande du moteur du magnétophone. Toutefois, ce dispositif est relativement complexe et n'est adapté qu'à un type bien spécifique de magnétophone.

Le dispositif électronique suivant l'invention permet en utilisant les composants électroniques discrets du commerce, suivant un schéma de base simple d'éviter les inconvénients de la commande manuelle et d'une commande spécifique telle que celle décrite dans le document DE-A-2 728 652.

Ces buts sont atteints grâce à un dispositif électronique permettant de commander automatiquement par la parole l'arrêt et la marche d'un magnétophone comprenant un microphone pour produire des signaux d'entrée basse fréquence, un circuit de mise en forme des signaux d'entrée, une bascule, et un interrupteur électronique pour la commande du moteur du magnétophone, caractérisé en ce que le microphone est constitué par un élément additionnel autonome vis-à-vis du microphone d'enregistrement, et totalement indépendant des circuits d'enregistrement et de lecture du magnétophone, et le dispositif comprend en outre un interrupteur à deux positions associé à la bascule pour autoriser une commande automatique de l'arrêt et de la marche du magnétophone lorsque ce dernier se trouve en position lecture ou en position enregistrement, une première position de l'interrupteur correspondant à un fonctionnement du magnétophone en lecture et provoquant l'arrêt sur parole et la mise en marche par l'absence de parole, et une deuxième position de l'interrupteur correspondant à un fonctionnement du magnétophone en enregistrement et provoquant la mise en marche sur parole et l'arrêt par son absence.

La mise en œuvre de ce système apporte une souplesse d'utilisation pendant l'enregistrement car aucune manipulation de la commande manuelle marche-arrêt du magnétophone n'est nécessaire ; c'est la parole de l'utilisateur qui déclenche le départ du défilement de la bande magnétique et l'absence l'arrêt : ce système permet aussi d'économiser la bande magnétique des cassettes pendant les temps d'absence de parole, temps réglable de 1 à 3 secondes ou plus si on le désire.

L'originalité de l'invention consiste dans la réalisation d'un circuit miniature de faible consommation, avec micro incorporé (3,3 mA en l'absence de signal et 4,7 mA avec signal). Ce circuit est caractérisé par un fonctionnement plus universel et peut réaliser au choix, une utilisation en position enregistrement et une seconde utilisation en position écoute du magnétophone par simple basculement d'un interrupteur.

En position écoute du magnétophone, le circuit électronique permet de commander automatiquement par la parole l'arrêt et la marche de l'appareil (à noter qu'en position enregistrement on commandait la séquence dans l'ordre marche et ensuite arrêt).

Dans cette seconde utilisation on peut réaliser des « blancs fictifs » sur une cassette destinée par exemple à l'étude des langues (répétition phrase par phrase pouvant avoir lieu autant de fois que l'utilisateur le désire). Il n'est plus nécessaire de réaliser des enregistrements spéciaux « élève-maître » avec temps préprogrammés à l'avance (et que l'on ne peut plus modifier par la suite) qui laissent juste les quelques secondes à l'élève pour répéter.

Avec ce dispositif le temps de base nécessaire aux répétitions est renouvelable autant de fois que cela est souhaitable et peut se régler à plus de 3 secondes si on le désire.

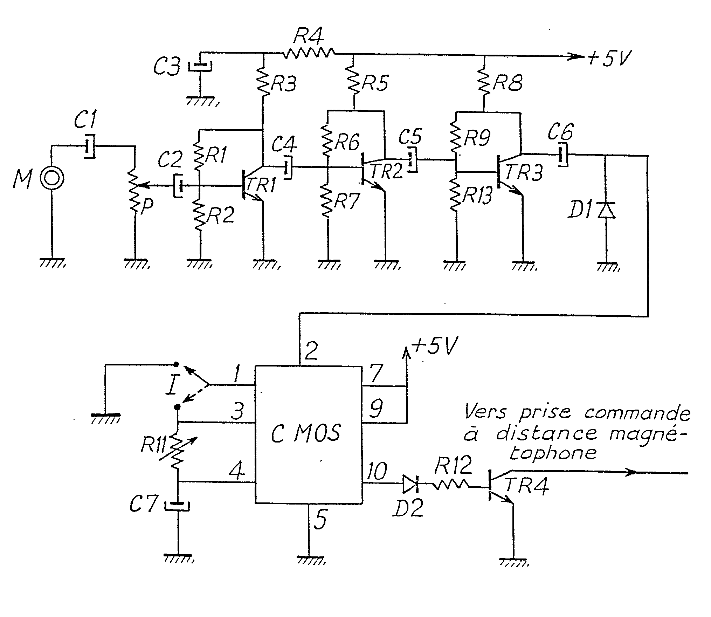

La figure de la planche unique représente le schéma d'un dispositif selon l'invention.

A titre indicatif les diverses valeurs relevées sur le circuit prototype sont les suivantes :

R1, R6, R9 = 190 KΩ ; R3, R5, R13 = 12 KΩ ; R8 = 5,6 KΩ ; R4, R12 = 1 KΩ ; R2, R7 = 82 KΩ ; R10 = 20 KΩ, R11 = 470 KΩ.
C1, C2, C4, C5, C6, C7 = 1 μF ; C3, C5 = 10 μF
P = 47 KΩ.

Dans le schéma de base, le circuit électronique est réalisé sur une petite plaquette de 50 mm × 30 mm dont l'épaisseur est conditionnée par l'encombrement du transistor utilisé, soit 8 mm environ. Les dimensions du circuit, réalisé en câblage aéré, nécessaire aux essais, peuvent être réduites par une implantation plus rationnelle et le choix de composants miniatures ; à la limite cette réduction peut aller jusqu'à la réalisation des fonctions du circuit sur une « puce » qui peut alors être incorporée facilement sur magnétophones sans augmentation de volume de ces appareils.

L'amplificateur constitue avec la diode D1, la capacité de sortie C4, une mise en forme des signaux en niveau et phase convenable pour commander une bascule à un état stable utilisant un circuit intégré C MOS ; ce dernier délivre une impulsion positive de largeur variable, réglage obtenu par une résistance ajustable R11 associée au condensateur C7. L'impulsion commande un transistor TR4 fonctionnant en interrupteur électronique qui par l'intermédiaire de la prise « commande à distance » (prise remote) du magnétophone, permet l'alimentation du moteur d'entraînement de la bande magnétique.

Le dispositif correspondant à la figure comporte un micro M incorporé sur la plaquette. Suivant les caractéristiques du micro un étage supplémentaire adaptateur peut être nécessaire.

Le micro M, commande par l'intermédiaire d'un potentiomètre P, (réglage de sensibilité) un ampli à 3 transistors TR1, TR2, TR3, dont les deux premiers fonctionnent en classe A et le dernier en classe A-B. Un interrupteur 1 à 2 positions est simplement rajouté, réalisant un mode de fonctionnement particulier du circuit intégré C MOS ; cet interrupteur, par commutation des sorties 1 et 3 du circuit intégré permet d'obtenir l'absence ou la présence d'impulsions de sortie commandant le transistor TR4.

On obtient ainsi le fonctionnement du dispositif électronique en position enregistrement ou en position lecture au choix. Du fait de l'intégration du micro au circuit on peut commander, soit la « prise de commande à distance », soit l'alimentation générale du magnétophone ; dans ce dernier cas l'économie en courant d'alimentation est appréciable car en l'absence de signal (position d'attente qui est en quelque sorte une position « pause améliorée » du magnétophone), la consommation n'est que de 3 mA environ et elle ne vient pas se rajouter à celle des circuits basse fréquence (50 mA ou plus suivant les appareils) si on utilise uniquement la prise « commande à distance » (alimentation du moteur) pour déclencher la marche-arrêt du magnétophone.

Le dispositif, objet de l'invention, trouve son application dans le perfectionnement de l'utilisation des magnétophones ; il permet les enregistrements de conférences, les dictées de courrier par exemple. D'une manière plus générale son emploi s'avèrera utile chaque fois que l'on a besoin d'avoir les mains libres et se concentrer uniquement sur l'idée à développer ou que l'on se trouve à quelques mètres de distance de l'appareil et que l'on veuille actionner la commande marche-arrêt sans être obligé de retourner près du magnétophone.

Le dispositif permet à la fois la commande automatique d'un magnétophone soit, en position enregistrement, soit en position écoute ; dans ce dernier cas une application privilégiée sera l'entraînement dans l'étude des langues, la préparation à la prise de parole par répétition à haute voix phrase par phrase de textes enregistrés ; le réglage du niveau de seuil par le potentiomètre P pouvant être un contrôle de la « portée ou puissance » de la voix (si la voix n'est pas jugée suffisamment forte, le magnétophone ne s'arrêtera pas, ce qui donne directement à l'élève et à son professeur la mesure de ses progrès dans ce domaine).

D'une façon plus générale la position écoute sera utilisée, lorsque l'on a besoin de faire des exercices pour améliorer sa diction ou sa mémoire.

Du fait de la faible consommation (3 à 5 mA environ) on peut rendre le dispositif parfaitement autonome par l'emploi de piles ou batteries miniatures ; cela permet d'imaginer des applications très variées en dehors même de la commande automatique de la marche-arrêt des magnétophones, prévue à l'origine de l'étude.

Par exemple une application serait la commande de la partie HF d'émetteur miniature pour protection contre le vol (maison, voiture), pour surveillance d'une chambre de malade, d'enfants, de locaux... La liste des applications décrites ici n'est pas limitative. On peut ainsi penser au déclenchement d'une action mécanique ou la mise en marche d'un émetteur sonar par exemple pour les études de fonds sous-marins en utilisant dans ce cas un micro à ultra-sons. D'autres applications, également dans le domaine des ultra-sons sont prévisibles, dans tous les cas ou une position veille ou d'attente de très faible consommation (3 mA par exemple, pouvant être réduite) est nécessaire pour déclencher une action mécanique ou autre, exigeant elle, une plus forte consommation en courant.

Dans un autre domaine on peut penser à une application dans les liaisons par interphone, le dispositif, associé à ces appareils permettant alors de commander d'une façon automatique la marche et arrêt de la liaison interphone sans aucune manipulation de boutons ou clés. Du fait de la faible consommation du dispositif, il peut rester branché en permanence, l'interphone proprement dit étant lui-même mis sous tension juste au moment du dialogue. Suivant la construction de l'interphone on peut obtenir des conversations en duplex intégral, les fonctions « réception » et « émission » étant mises instantanément et simultanément en œuvre par la parole du correspondant demandeur agissant sur le dispositif électronique décrit ci-dessus.

**Revendications**

1. Dispositif électronique permettant de commander automatiquement par la parole l'arrêt et la marche d'un magnétophone comprenant un microphone (M) pour produire des signaux d'entrée basse fréquence, un circuit de mise en forme des signaux d'entrée ($C_1$ à $C_6$, $R_1$ à $R_9$, $R_{13}$, $TR_1$, $TR_2$, $TR_3$, $D_1$) une bascule, (CMOS)

et un interrupteur électronique TR$_4$ pour la commande du moteur du magnétophone, caractérisé en ce que le microphone (M) est constitué par un élément additionnel autonome vis-à-vis du microphone d'enregistrement, et totalement indépendant des circuits d'enregistrement et de lecture du magnétophone, et en ce que le dispositif comprend en outre un interrupteur (I) à deux positions associé à la bascule (C MOS) pour autoriser une commande automatique de l'arrêt et de la marche du magnétophone lorsque ce dernier se trouve en position lecture ou en position enregistrement, une première position de l'interrupteur (I) correspondant à un fonctionnement du magnétophone en lecture et provoquant l'arrêt sur parole et la mise en marche par l'absence de parole, et une deuxième position de l'interrupteur (I) correspondant à un fonctionnement du magnétophone en enregistrement et provoquant la mise en marche sur parole et l'arrêt par son absence.

2. Dispositif selon la revendication 1, caractérisé en ce que la bascule comprend un circuit intégré (C MOS) auquel est associé l'interrupteur (I) à deux positions permettant par commutation d'une première (1) et d'une 2ème broche (3) du circuit intégré (C MOS), d'obtenir la présence ou l'absence d'un créneau de tension au niveau positif à la sortie (10) de la bascule.

3. Dispositif selon les revendications 1 ou 2, caractérisé en ce que les signaux basse fréquence sont dosés en niveau par un potentiomètre (p) disposé entre le microphone (M) et l'entrée de l'amplificateur pour permettre un réglage de seuil de déclenchement de la bascule (C MOS).

4. Dispositif selon la revendication 2, caractérisé en ce que la bascule (C MOS) comprend une résistance ajustable (R$_{11}$) et un condensateur (C$_7$) associés à la bascule pour permettre un réglage de la constante de temps du créneau de tension positif délivré par la bascule, ou son absence.

5. Dispositif selon l'une quelconque des revendications 1 à 4, caractérisé en ce que le signal de sortie de la bascule (C MOS) commande par l'intermédiaire d'une diode (D$_2$) de protection et d'une résistance (R$_{12}$), le courant de base nécessaire, dosé par cette résistance, pour saturer le transistor interrupteur électronique (TR$_4$) et permettre ainsi d'ajuster le débit de courant nécessaire pour alimenter par l'intermédiaire du collecteur de sortie de ce transistor interrupteur (TR$_4$) et de la prise de commande à distance du magnétophone, le moteur de défilement de la bande ou de la cassette.

6. Dispositif suivant l'une quelconque des revendications 1 à 5, caractérisé en ce qu'il comporte une alimentation autonome de faible consommation associée au microphone additionnel (M) et aux circuits électroniques connectés au microphone pour commander la prise de commande à distance du magnétophone.

7. Dispositif suivant l'une quelconque des revendications 1 à 6, caractérisé en ce qu'il comporte une alimentation autonome de faible consommation associée au microphone additionnel (M) et aux circuits électroniques connectés au microphone pour commander l'alimentation générale du magnétophone.

## Claims

1. Electronic device permitting by the speech action to control the automatic start and stop of a tape recorder comprising a microphone (M) for producing low frequency input signals, an input signal re-shaping circuit (C$_1$ to C$_5$, R$_1$ to R$_9$, R$_{13}$, TR$_1$, TR$_2$, TR$_3$, D$_1$), a flip-flop (C MOS), and an electronic switch (TR$_4$) for controlling the motor of the tape recorder, characterized in that the microphone (M) is constituted by an additional element which is autonomous from the recording microphone, and completely independent from the tape recorder recording and playing back circuits, and in that the device further comprises a two-position switch (I) associated with the flip-flop (C MOS) to authorize an automatic control of the start-stop of the tape recorder when the latter is in a playingback position or in a recording position, a first position of the switch (I) corresponding to the playing back operation of the tape recorder and triggering the stop through speech and the start through absence of the speech, and a second position of the switch (I) corresponding to a recording operation of the tape recorder and triggering the start through speech and the stop through absence of speech.

2. Device according to claim 1, characterized in that the flip-flop comprises a (C MOS) integrated circuit with which is associated the two-position switch (I) permitting through the connection of a first (1) and second (3) pin of the (C MOS) integrated circuit, to obtain the presence or the absence of a voltage pulse at the positive level at the output (10) of the flip-flop.

3. Device according to claims 1 or 2, characterized in that the level of the low frequency signals is controlled by a potentiometer (p) disposed between the microphone (M) and the input of the amplifier to allow an adjustment of the (C MOS) flip-flop triggering threshold.

4. Device according to claim 2, characterised in that the (C MOS) flip-flop comprises an adjustable resistor (R$_{11}$) and a capacitor (C$_7$) associated to the flip-flop to allow a control of the time constant of the positive voltage pulse delivered by the flip-flop, or the absence thereof.

5. Device according to any one of claims 1 to 4, characterized in that the output signal of the (C MOS) flip-flop controls via a diode (D$_2$) of protection and a resistor (R$_{12}$), the basic current necessary, and controlled by said resistor, for saturating the electronic switch transistor (TR$_4$) and thus to allow the adjustment of the flow of current necessary to energize, via the output collector of the said switching transistor (TR$_4$) and of the tape recorder remote-control plug, the motor driving the tape recorder.

6. Device according to any one of claims 1 to 5, characterized in that it comprises an autonomous power supply of low consumption associated with the additional microphone (M) and with the electronic circuits connected to the microphone for controlling the tape-recorder remote control plug.

7. Device according to any one of claims 1 to 6, characterized in that it comprises an autonomous power supply of low consumption associated to the additional microphone (M) and to the electronic circuits connected to the microphone for controlling the general supply of the magnetophone.

**Ansprüche**

1. Elektronische Vorrichtung zum automatischen Start-Stop-Steuern eines Tonbandgerätes durch die Sprache mit einem Mikrofon (M) zur Erzeugung von Eingangssignalen niedriger Frequenz, einem Schaltkreis zum Aufbereiten der Eingangssignale ($C_1$ bis $C_6$, $R_1$ bis $R_9$, $R_{13}$, $TR_1$, $TR_2$, $TR_3$, $D_1$), einer Kippschaltung (C MOS) und einem elektronischen Unterbrecher ($TR_4$) zum Steuern des Motors des Tonbandgeräts, dadurch gekennzeichnet, daß das Mikrofon (M) durch ein gegenüber dem aufnahmemikrofon selbständiges und vom Aufnahme- und vom Abspielkreis des Tonbandgeräts vollkommen unabhängiges Zusatzelement gebildet ist und daß die Vorrichtung weiters einen der Kippschaltung (C MOS) zugeordneten Zweipositionen-Unterbrecher (I) zum Auslösen einer automatischen Steuerung des Stops und Starts des Tonbandgeräts, wenn sich letzteres in Abspiel- oder in Aufnahmeposition befindet, umfaßt, wobei eine erste Position des Unterbrechers (I) einem Abspielbetrieb des Tonbandgerätes entspricht und bei Sprechen den Stop und bei Nichtsprechen den Start auslöst und eine zweite Position des Unterbrechers (I) einem Aufnahmebetrieb des Tonbandgeräts entspricht und bei Sprechen den Start und bei Nichtsprechen den Stop auslöst.

2. Vorrichtung nach Anspruch 1, dadurch gekennzeichnet, daß die Kippschaltung einen integrierten Schaltkreis (C MOS) umfaßt, dem der Zweipositionen-Unterbrecher (I) zugeordnet ist, wobei es durch Umschalten zwischen einem ersten (1) und einem zweiten Kontakt (3) des integrierten Schaltkreises (C MOS) möglich ist, das Vorhandensein oder Nichtvorhandensein eines Spannungsimpulses positiven Niveaus am Ausgang (10) der Kippschaltung zu erzielen.

3. Vorrichtung nach den Ansprüchen 1 oder 2, dadurch gekennzeichnet, daß die Signale niedriger Frequenz durch ein zwischen dem Mikrofon (M) und dem Eingang des Verstärkers angeordnetes Potentiometer (p) im Niveau dosiert werden, um eine Regelung der Auslöseschwelle der Kippschaltung (C MOS) zu ermöglichen.

4. Vorrichtung nach Anspruch 2, dadurch gekennzeichnet, daß die Kippschaltung (C MOS) einen einstellbaren Widerstand ($R_{11}$) und einen Kondensator ($C_7$) umfaßt, welche der Kippschaltung zwecks Ermöglichung einer Regelung der Zeitkonstante des von der Kippschaltung abgegebenen positiven Spannungsimpulses oder seiner Abwesenheit zugeordnet sind.

5. Vorrichtung nach einem der Ansprüche 1 bis 4, dadurch gekennzeichnet, daß das Ausgangssignal der Kippschaltung (C MOS) mittels einer Schutzdiode ($D_2$) und eines Widerstands ($R_{12}$) den durch diesen Widerstand dosierten Basisstrom steuert, der notwendig ist, um den elektronischen Unterbrechertransistor ($TR_4$) zu sättigen und so den Strombedarf einzustellen, der zur Speisung des Motors zum Abspielen des Bandes oder der Kassette mittels des Ausgangskollektors dieses Unterbrechertransistors ($TR_4$) und der Fernsteuerung des Tonbandgeräts notwendig ist.

6. Vorrichtung nach einem der Ansprüche 1 bis 5, dadurch gekennzeichnet, daß sie eine selbständige Versorgung mit niedrigem Verbrauch umfaßt, die mit dem Zusatzmikrofon (M) und den an das Mikrofon zum Steuern der Fernsteuerung des Tonbandgeräts angeschlossenen elektronischen Schaltkreisen verbunden ist.

7. Vorrichtung nach einem der Ansprüche 1 bis 6, dadurch gekennzeichnet, daß sie eine selbständige Versorgung mit niedrigem Verbrauch umfaßt, die mit dem Zusatzmikrofon (M) und den an das Mikrofon zum Steuern der Hauptversorgung des Tonbandgeräts angeschlossenen elektronischen Schaltkreisen verbunden ist.